# EUROPEAN PATENT SPECIFICATION

(11) **EP 4 342 618 B1**
(45) Date of publication and mention of the grant of the patent: **08.04.2026**
(21) Application number: 22827926.1
(22) Date of filing: 18.02.2022
(51) Int. Cl.: B23K 11/14, B23K 11/30, B23K 11/36, B23K 11/00

(54) **BOLT FEEDER**
BOLZENZUFÜHRER
DISTRIBUTEUR DE BOULONS

(30) Priority: 23.06.2021 JP 2021104113
(43) Date of publication of application: 27.03.2024
(73) Proprietor: Seki Kogyo Co., Ltd., Hatsukaichi-shi, Hiroshima, 738-0034 (JP)
(72) Inventor: SAKOTA, Kouji, Hatsukaichi-shi, Hiroshima 738-0034 (JP); MIURA, Seiji, Hatsukaichi-shi, Hiroshima 738-0034 (JP); HANDA, Masayasu, Hatsukaichi-shi, Hiroshima 738-0034 (JP); ODA, Naoki, Hatsukaichi-shi, Hiroshima 738-0034 (JP)
(74) Representative: Germain Maureau
(86) International application number: PCT/JP2022/006590
(87) International publication number: WO 2022/270003

(56) References cited:
- CN-U- 205 858 919
- JP-A- 2001 259 937
- JP-A- 2011 079 048
- JP-A- 2018 192 499
- JP-A- 2019 107 654
- JP-A- 2020 032 451
- JP-A- H11 207 469

## Description

### TECHNICAL FIELD

The present disclosure relates to a resistance welding system (see for example JP 2020 032451 A).

### BACKGROUND ART

Bolt feeders for supplying bolts to a resistance welding machine are known. For example, a bolt feeder according to Patent Document 1 is applied to a resistance welding machine including a stationary lower electrode on which a workpiece with an insertion hole is mounted, and an upper electrode that moves up and down. The bolt feeder includes: a positioning guide pin that protrudes from and retracts into the tip end of the lower electrode and fits into the insertion hole of the workpiece; a holding unit that receives the bolt fed from a bolt aligner at a bolt receiving position with the head located above the shaft; and a moving unit that moves the holding unit holding the bolt from the bolt receiving position to a bolt welding position between the upper and lower electrodes. The resistance welding machine welds the head of the bolt to the workpiece with the shaft of the bolt inserted into the insertion hole of the workpiece from above.

### CITATION LIST

### PATENT DOCUMENT

Patent Document 1: Japanese Unexamined Patent Publication No. 2002-18650

### SUMMARY OF THE INVENTION

### TECHNICAL PROBLEM

In Patent Document 1, the bolt includes a projection on the bottom surface (i.e., the lower surface) of the head which is identical with the surface provided with the shaft. With the shaft of the bolt inserted into the insertion hole of the workpiece from above, the upper electrode presses and pressurizes, from above, the top surface (i.e., the upper surface) of the head of the bolt which is opposite to the surface provided with the shaft. Accordingly, the projection on the bottom surface of the head of the bolt abuts on the upper surface of the workpiece. When a current is applied between the upper and lower electrodes, the bottom surface of the head of the bolt is welded to the upper surface of the workpiece.

There may be a demand to weld the top surface of the head of a bolt to the lower surface of a workpiece. In this case, the top surface of the head of the bolt includes a projection. The lower electrode also includes an insertion hole which faces the upper electrode and into which the shaft of the bolt can be inserted.

The upper electrode presses the top surface of the head of the bolt from above, which is the first pressurization onto the top surface of the head of the bolt from above. Accordingly, the shaft of the bolt is inserted into the insertion hole of the lower electrode. If the workpiece is placed on the top of the head of the bolt, the lower surface of the workpiece abuts on the projection on the top surface of the head of the bolt. When the upper electrode is moved downward, the upper electrode presses the top surface of the head of the bolt from above via the workpiece. Accordingly, the second pressurization is performed on the top surface of the head of the bolt, and the workpiece and the bolt are sandwiched between the upper and lower electrodes. When a current is applied between the upper and lower electrodes, the top surface of the head of the bolt is welded to the lower surface of the workpiece.

However, the method described above has the following problem. At the time of the first pressurization where the upper electrode presses the top surface of the head of the bolt from above in order to insert the shaft of the bolt into the insertion hole of the lower electrode, the projection on the top surface is crushed. The crush of the projection causes improper welding.

The present disclosure was made in view of the problem. It is an objective of the present disclosure to weld the head of a bolt to the lower surface of a workpiece while reducing the crush of a projection.

### SOLUTION TO THE PROBLEM

A resistance welding system according to the present disclosure is described in claim 1.

With this configuration, when the shaft of the bolt is inserted into the insertion hole of the lower electrode, the pusher member protruding from the tip end of the upper electrode pushes the area, where the projections are absent, of the top surface of the head of the bolt. This can reduce the crush of the projection and can thus reduce improper welding due to the crush of the projection.

After the shaft of the bolt has been inserted into the insertion hole of the lower electrode, the workpiece is placed on the top of the head of the bolt so that the lower surface of the workpiece abuts on the projection on the top surface of the head of the bolt. The workpiece and the bolt are then sandwiched between the lower and upper electrodes, and a current is applied to the lower and upper electrodes. Accordingly, the top surface of the head of the bolt is welded to the lower surface of the workpiece.

In one embodiment, the resistance welding system further comprises: a guide member accommodated in the insertion hole of the lower electrode and configured to protrude from and retract into a tip end of the lower electrode, wherein the guide member being configured to guide the shaft to the insertion hole while abutting on the shaft. This configuration allows for more reliable insertion of the shaft of the bolt into the insertion hole of the lower electrode.

### ADVANTAGES OF THE INVENTION

According to the present disclosure, the head of a bolt is welded to the lower surface of a workpiece while reducing the crush of a projection.

### BRIEF DESCRIPTION OF THE DRAWINGS

FIG. 1 is a front view showing a bolt feeder according to an embodiment of the present disclosure, with a bolt holder holding a bolt.
FIG. 2 is a perspective view showing a bolt.
FIG. 3 is a view seen along the arrow **III** in FIG. 1.
FIG. 4 is a front sectional view showing inner structures of upper and lower electrodes with a pusher member and a guide member retracting.
FIG. 5 is a front sectional view showing inner structures of upper and lower electrodes with a pusher member and a guide member protruding.
FIG. 6 corresponds to FIG. 1 and shows a guide member protruding from the tip end of a lower electrode and a pusher member protruding from the tip end of an upper electrode.
FIG. 7 corresponds to FIG. 3 and shows a view seen along the arrow VII in FIG. 6.
FIG. 8 corresponds to FIG. 1 and shows the head of a bolt pushed by a pusher member.
FIG. 9 corresponds to FIG. 3 and shows a view seen along the arrow IX in FIG. 8.
FIG. 10 corresponds to FIG. 1 and shows a workpiece placed on the top of the head of a bolt.
FIG. 11 corresponds to FIG. 1 and shows resistance-welding of the lower surface of a workpiece and the head of a bolt.
FIG. 12 corresponds to FIG. 3 and shows a view seen along the arrow XII in FIG. 11.

### DETAILED DESCRIPTION

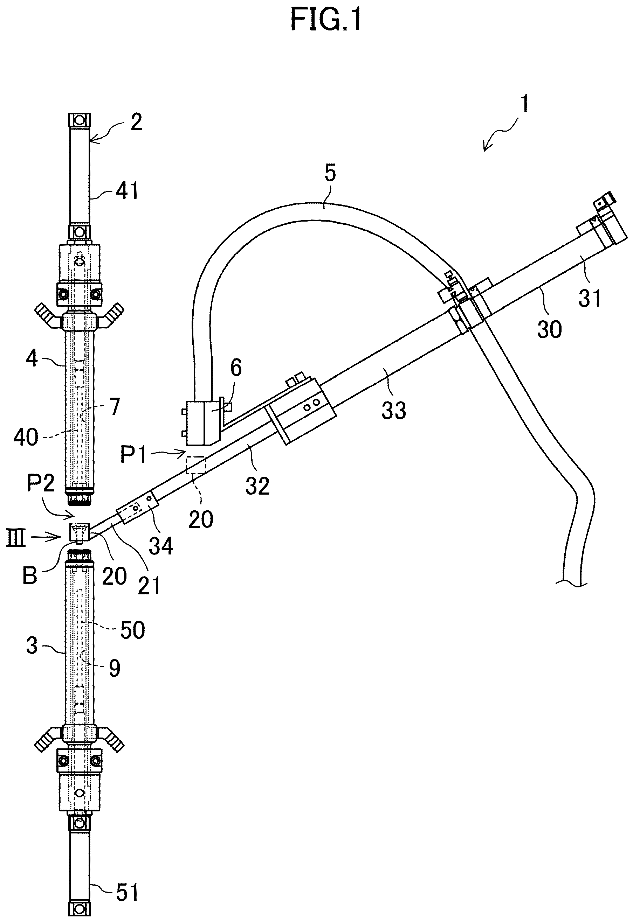

Now, an embodiment of the present disclosure will be described in detail with reference to the drawings. The following description of an advantageous embodiment is merely illustrative in nature, and is not at all intended to limit the scope, applications or use of the present disclosure. The up-down direction in FIG. 1 is referred to as the "vertical direction," the left-right direction in FIG. 1 is referred to as the "longitudinal direction," and the direction perpendicular to the paper surface in FIG. 1 is referred to as the "transverse direction." The left in FIG. 1 is referred to as the "front," and the right in FIG. 1 is referred to as the "rear."

### (Configuration of Bolt Feeder)

FIG. 1 shows a bolt feeder 1. Although the details will be described later, FIG. 1 shows a bolt holder 20, which will be described later, holding a bolt B. The bolt feeder 1 is applied to a resistance welding machine 2 and supplies the bolt B to the resistance welding machine 2. The resistance welding machine 2 includes a lower electrode 3 and an upper electrode 4. The lower electrode 3 remains stationary and does not move. The lower and upper electrodes 3 and 4 are each a rod body with a circular transverse section and extends vertically. The upper electrode 4 is moved up and down by an air cylinder mechanism (not shown). The resistance welding machine 2 performs resistance-welding of a workpiece W and the bolt B by applying a current between the lower and upper electrodes 3 and 4 with the workpiece W and the bolt B sandwiched between the lower and upper electrodes 3 and 4.

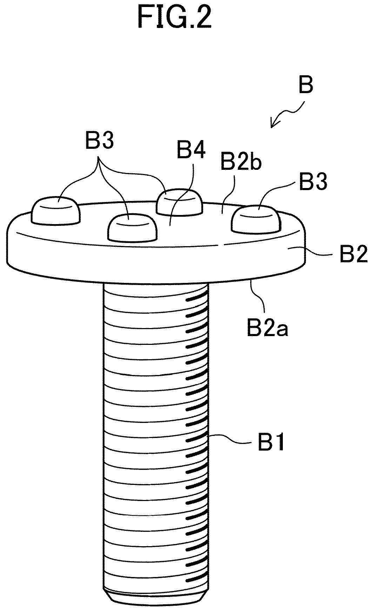

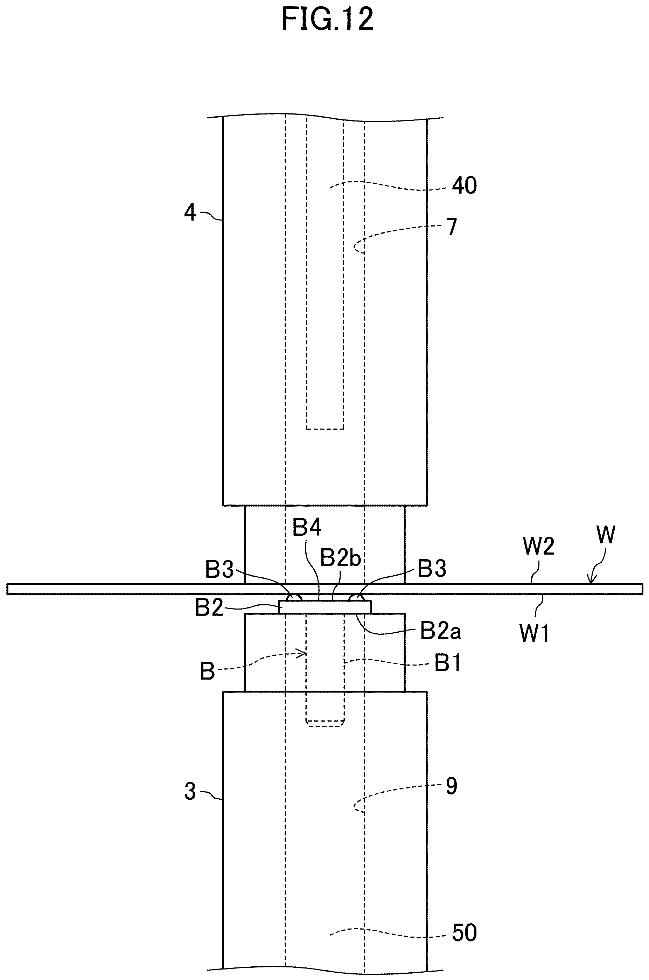

The workpiece W is in a plate shape and includes a lower surface W1 and an upper surface W2 (see FIG. 12). FIG. 2 shows the bolt B. As shown in FIG. 2, the bolt B is a welded bolt and includes a shaft B1, a head (i.e., a flange) B2, and a plurality of projections B3. The shaft B1 is a rod body extending on the center axis of the bolt B. The head B2 is in a disk shape. The shaft B1 extends from a central portion of the bottom surface B2a of the head B2. The projections B3 are provided on the top surface B2b of the head B2, which is opposite to the surface from which the shaft B1 extends. The plurality of projections B3 are provided on the outer circumference of the top surface B2b. The vicinity B4 (hereinafter referred to as a "non-projecting area B4") of the center of the top surface B2b is an area where the projections B3 are absent.

As shown in FIG. 1, the bolt feeder 1 includes the bolt holder 20 as a holding unit and an air cylinder mechanism 30 as a moving unit. The bolt holder 20 receives the bolt B fed by a bolt chute 5 serving as a bolt feeding unit at a bolt receiving position P1 (see the dash-dot-dot line in FIG. 1) with the head B2 of the bolt B located above the shaft B1. That is, the bolt B is held in the bolt holder 20 with the head B2 located above the shaft B1.

The bolt chute 5 is in a tubular shape. A known bolt aligner (not shown) for aligning the orientation (attitude) of the bolt B is placed at the upstream end of the bolt chute 5. A guide 6 for guiding the direction of supplying the bolt B to the vertical direction is interposed between the bolt chute 5 and the bolt holder 20.

The air cylinder mechanism 30 moves the bolt holder 20 holding the bolt B, from the bolt receiving position P1 to a welding position P2 between the lower and upper electrodes 3 and 4. The air cylinder mechanism 30 includes a cylinder 31, a piston (not shown) that moves back and forth in the cylinder 31, a rod 32 connected to the piston so as to move integrally back and forth, and a rod holder 33. The rod 32 protrudes toward the front of the cylinder 31. The rod holder 33 covers the periphery of the rod 32 in front of the cylinder 31. The rod 32 has a tip end joined to the bolt holder 20 via a joint 34.

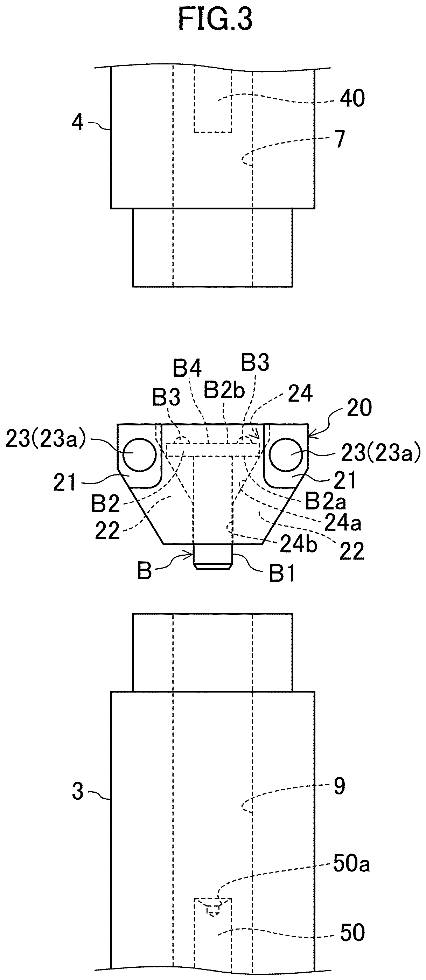

FIG. 3 shows the bolt holder 20 viewed from the arrow **III** in FIG. 1. As shown in FIGS. 1 and 3, the bolt holder 20 includes a fixed part 21 joined to the tip end of the rod 32 via the joint 34, and a pair of claws 22 capable of transversely approaching and separating from each other. Each claw 22 opens and closes to the left and right with respect to the fixed part 21 from an upper hinge 23 as a starting point. A kick spring 23a as a biasing unit is attached to the hinge 23.

The kick spring 23a biases the claws 22 in a direction in which the claws 22 approach each other. Specifically, when no load is applied to each claw 22 (i.e., in an unloaded state), the biasing force of the kick spring 23a causes the lower tips of the claws 22 to approach each other. On the other hand, when a load is applied to each claw 22 transversely outward against the biasing force of the kick spring 23a (i.e., in a loaded state), the tips of the claws 22 separate from each other.

As shown in FIG. 3, where the claws 22 are close to each other (i.e., the unloaded state), a bolt holding hole 24 appears inside the pair of claws 22. The bolt holding hole 24 has a circular transverse section and penetrates the bolt holder 20 vertically.

The bolt holding hole 24 has a taper 24a inclined with the inner diameter decreasing toward the bottom, and a straight part 24b extending downward from the lower end of the taper 24a. The straight part 24b has a constant inner diameter. The upper end of the taper 24a has an inner diameter larger than the outer diameter of the head B2 of the bolt B. On the other hand, the lower end of the taper 24a has an inner diameter smaller than the outer diameter of the head B2 of the bolt B and slightly larger than the outer diameter of the shaft B1. The straight part 24b has an inner diameter equal to the inner diameter of the lower end of the taper 24a, that is, slightly larger than the outer diameter of the shaft B1 of the bolt B.

As shown in FIG. 3, when the bolt B is supplied to the bolt holding hole 24 of the bolt holder 20, the shaft B1 of the bolt B is inserted through the straight part 24b, while the head B2 is caught by the taper 24a. Accordingly, the bolt B is held in the bolt holding hole 24 of the bolt holder 20. When the bolt B is held in the bolt holding hole 24, the shaft B1 of the bolt B slightly protrudes from the lower end of the straight part 24b (i.e., the bolt holding hole 24).

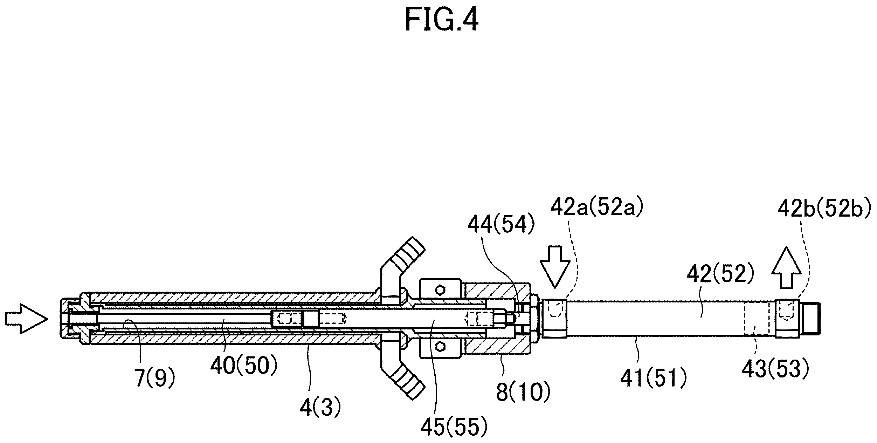

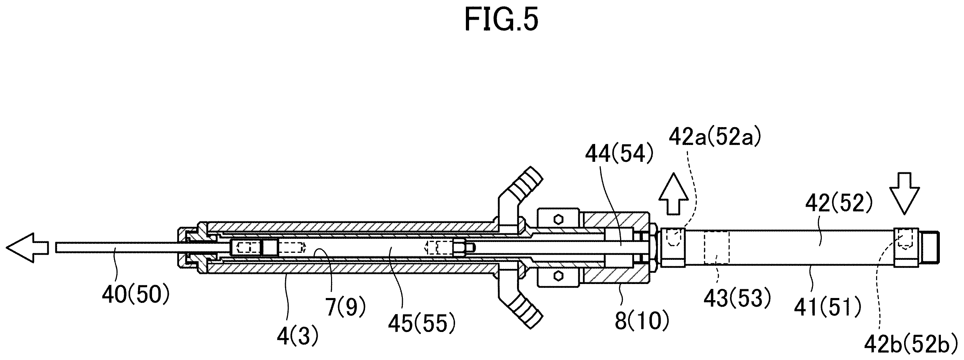

FIGS. 4 and 5 show inner structures of the upper and lower electrodes 4 and 3. The inner structures of the upper and lower electrodes 4 and 3 are basically the same. Now, the inner structures of the upper and lower electrodes 4 and 3 will be described with reference to FIGS. 4 and 5.

First, the inner structure of the upper electrode 4 will be described. The right of FIGS. 4 and 5 corresponds to the top, while the left of FIGS. 4 and 5 corresponds to the bottom. As shown in FIGS. 4 and 5, the upper electrode 4 includes an accommodation hole 7. The accommodation hole 7 extends vertically inside the upper electrode 4 and penetrates the upper electrode 4. The accommodation hole 7 faces the tip end (i.e., the upper end) of the lower electrode 3 (see FIGS. 1 and 3). Specifically, with the bolt holder 20 positioned at the welding position P2, the accommodation hole 7 faces the top surface B2b of the head B2 of the bolt B held in the bolt holding hole 24 (see FIGS. 1 and 3).

The accommodation hole 7 accommodates a pusher member 40. The pusher member 40 is a rod body with a circular transverse section and a smaller diameter than the upper electrode 4. Specifically, the pusher member 40 has an outer diameter smaller than the outer diameter of the upper electrode 4. The outer diameter of the pusher member 40 is smaller than the inner diameter of the upper electrode 4 (i.e., the diameter of the accommodation hole 7). An air cylinder mechanism 41 causes the pusher member 40 to protrude from and retract into the tip end (i.e., the lower end) of the upper electrode 4.

The air cylinder mechanism 41 moves the pusher member 40 vertically back and forth. Accordingly, the pusher member 40 retracts from the tip end of the upper electrode 4 and protrudes from the tip end of the upper electrode 4. Here, FIG. 4 shows the pusher member 40 retracting from the tip end of the upper electrode 4. FIG. 5 shows the pusher member 40 protruding from the tip end of the upper electrode 4.

As shown in FIGS. 4 and 5, the air cylinder mechanism 41 includes a cylinder 42, a piston 43 that moves back and forth in the cylinder 42, and a rod 44 connected to the piston 43 so as to move integrally back and forth. The cylinder 42 is coaxially connected to the upper end (i.e., the proximal end) of the upper electrode 4 by a connector 8. The rod 44 protrudes downward from the cylinder 42. The rod 44 protruding downward from the cylinder 42 is inserted into the accommodation hole 7 of the upper electrode 4 from above. The rod 44 has a tip end joined to the pusher member 40 via a joint 45 so as to move integrally back and forth.

The cylinder 42 includes a first port 42a placed at the lower end and a second port 42b placed at the upper end. As shown in FIG. 4, when air is supplied below the piston 43 in the cylinder 42 via the first port 42a, the piston 43 is pushed up so that the pusher member 40 retracts from the tip end of the upper electrode 4. The air above the piston 43 in the cylinder 42 is discharged through the second port 42b.

As shown in FIG. 5, when air is supplied above the piston 43 in the cylinder 42 via the second port 42b, the piston 43 is pushed down so that the pusher member 40 protrudes from the tip end of the upper electrode 4. The air below the piston 43 in the cylinder 42 is discharged through the first port 42a. The back and forth movement of the pusher member 40 by the air cylinder mechanism 41 is controlled by a control unit (not shown).

Next, the inner structure of the lower electrode 3 will be described. The right of FIGS. 4 and 5 corresponds to the bottom, and the left of FIGS. 4 and 5 corresponds to the top. As shown in FIGS. 4 and 5, the lower electrode 3 includes an insertion hole (introduction hole) 9. The insertion hole 9 extends vertically inside the lower electrode 3 and penetrates the lower electrode 3. The insertion hole 9 faces the tip end (i.e., the lower end) of the upper electrode 4 (see FIGS. 1 and 3). Specifically, with the bolt holder 20 positioned at the welding position P2, the insertion hole 9 faces the tip end of the shaft B1 of the bolt B held in the bolt holding hole 24 (see FIGS. 1 and 3).

The insertion hole 9 has an inner diameter smaller than the outer diameter of the head B2 of the bolt B. On the other hand, the inner diameter of the insertion hole 9 is larger than the outer diameter of the shaft B1 of the bolt B. The shaft B1 of the bolt B is inserted (introduced) into the insertion hole 9.

The insertion hole 9 accommodates a guide member 50. The guide member 50 is a rod body with a circular transverse section and a smaller diameter than the lower electrode 3. Specifically, the guide member 50 has an outer diameter smaller than the outer diameter of the lower electrode 3. The outer diameter of the guide member 50 is smaller than the inner diameter of the lower electrode 3 (i.e., the diameter of the insertion hole 9). An air cylinder mechanism 51 causes the guide member 50 to protrude from and retract into the tip end (i.e., the upper end) of the lower electrode 3. The guide member 50 includes an end surface on which a cone-shaped holder 50a is formed (see FIG. 3). Specifically, the holder 50a is a concave part with a circular transverse section and a diameter decreasing toward the bottom (see FIG. 3). The guide member 50 may be inserted (fitted) into the insertion hole 9 of the lower electrode 3.

The air cylinder mechanism 51 moves the guide member 50 vertically back and forth. Accordingly, the guide member 50 retracts from the tip end of the lower electrode 3 and protrudes from the tip end of the lower electrode 3. Here, FIG. 4 shows the guide member 50 retracting from the tip end of the lower electrode 3. FIG. 5 shows the guide member 50 protruding from the tip end of the lower electrode 3.

As shown in FIGS. 4 and 5, the air cylinder mechanism 51 includes a cylinder 52, a piston 53 that moves back and forth in the cylinder 52, and a rod 54 connected to the piston 53 so as to move integrally back and forth. The cylinder 52 is coaxially connected to the lower end (i.e., the proximal end) of the lower electrode 3 by a connector 10. The rod 54 protrudes upward from the cylinder 52. The rod 54 protruding upward from the cylinder 52 is inserted into the insertion hole 9 of the lower electrode 3 from below. The rod 54 has a tip end joined to the guide member 50 via a joint 55 so as to move integrally back and forth.

The cylinder 52 includes a first port 52a placed at the upper end and a second port 52b placed at the lower end. As shown in FIG. 4, when air is supplied above the piston 53 in the cylinder 52 via the first port 52a, the piston 53 is pushed down so that the guide member 50 retracts from the tip end of the lower electrode 3. The air below the piston 53 in the cylinder 52 is discharged through the second port 52b.

As shown in FIG. 5, when air is supplied below the piston 53 in the cylinder 52 via the second port 52b, the piston 53 is pushed up so that the guide member 50 protrudes from the tip end of the lower electrode 3. The air above the piston 53 in the cylinder 52 is discharged through the first port 52a. The back and forth movement of the guide member 50 by the air cylinder mechanism 51 is controlled by a control unit (not shown).

### (Operation Mode of Bolt Feeder)

An operation mode of the bolt feeder 1 will be described. As shown in FIG. 1, after the orientation (attitude) of the bolt B is adjusted by a bolt aligner (not shown), the bolt B is fed to the bolt holder 20 at the bolt receiving position P1 (see the two-dot chain line in FIG. 1) via the bolt chute 5 with the head B2 located above the shaft B1. The bolt holder 20 receives the bolt B at the bolt receiving position P1 with the head B2 located above the shaft B1.

Specifically, as shown in FIG. 3, the shaft B1 of the bolt B is inserted through the straight part 24b of the bolt holding hole 24 of the bolt holder 20, while the head B2 is caught by the taper 24a. Accordingly, the bolt B is held in the bolt holding hole 24. At this time, the tip end of the shaft B1 protrudes from the lower end of the straight part 24b (i.e., the bolt holding hole 24).

As shown in FIG. 1, the bolt holder 20 holding the bolt B is moved by the air cylinder mechanism 30 from the bolt receiving position P1 to the welding position P2 between the lower and upper electrodes 3 and 4. Here, as shown in FIG. 3, the insertion hole 9 of the lower electrode 3 faces the tip end of the shaft B1 of the bolt B. The guide member 50 retracts downward from the tip end of the lower electrode 3. On the other hand, the accommodation hole 7 of the upper electrode 4 faces the top surface B2b of the head B2 of the bolt B. The pusher member 40 retracts upward from the tip end of the upper electrode 4.

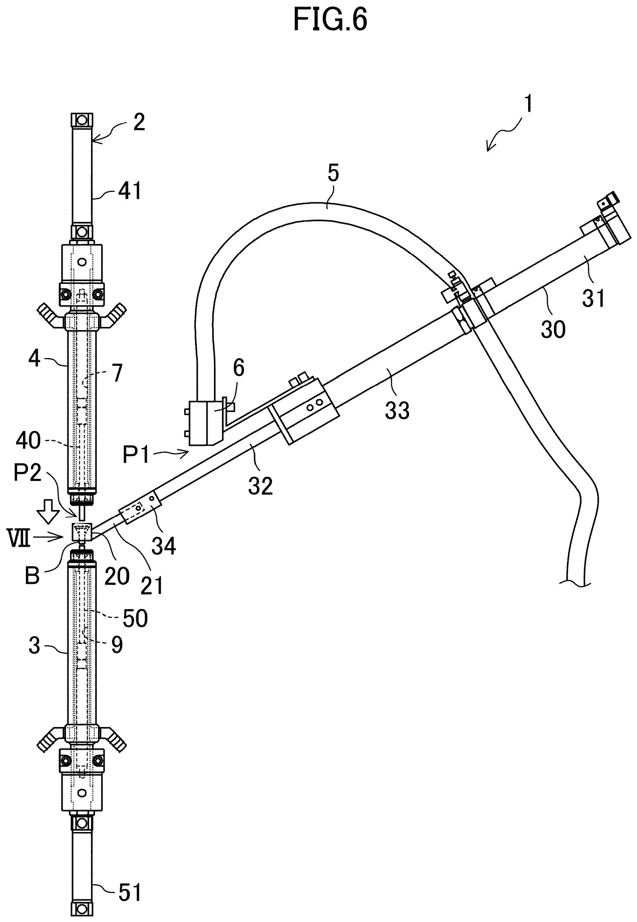

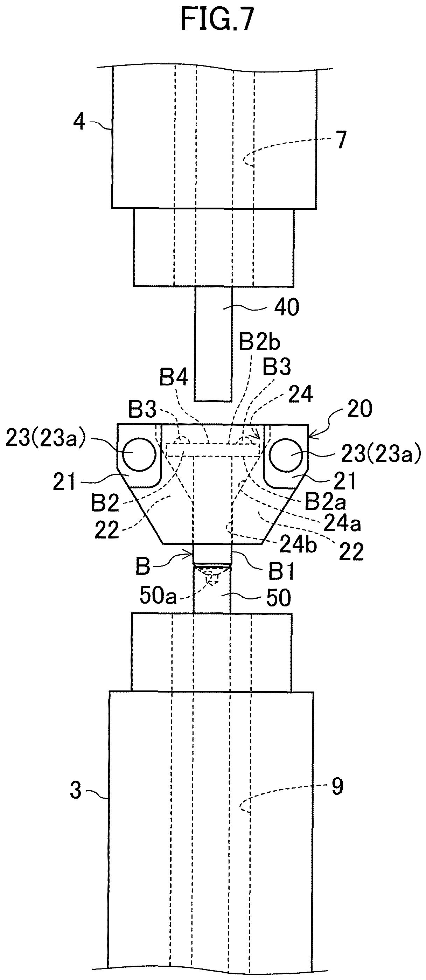

FIGS. 6 and 7 show the guide member 50 protruding from the tip end of the lower electrode 3 and the pusher member 40 protruding from the tip end of the upper electrode 4. As shown in FIGS. 6 and 7, the guide member 50 is moved upward by the air cylinder mechanism 51 so as to protrude upward from the tip end of the lower electrode 3. The guide member 50 protruding from the tip end of the lower electrode 3 abuts on the tip end of the shaft B1 of the bolt B. At this time, the tip end of the shaft B1 of the bolt B is held in the cone-shaped holder 50a on the end surface of the guide member 50. On the other hand, the pusher member 40 is moved downward by the air cylinder mechanism 41 so as to protrude downward from the tip end of the upper electrode 4. The pusher member 40 protruding from the tip end of the upper electrode 4 faces the vicinity (i.e., the non-projecting area) B4 of the center of the top surface B2b of the head B2 of the bolt B.

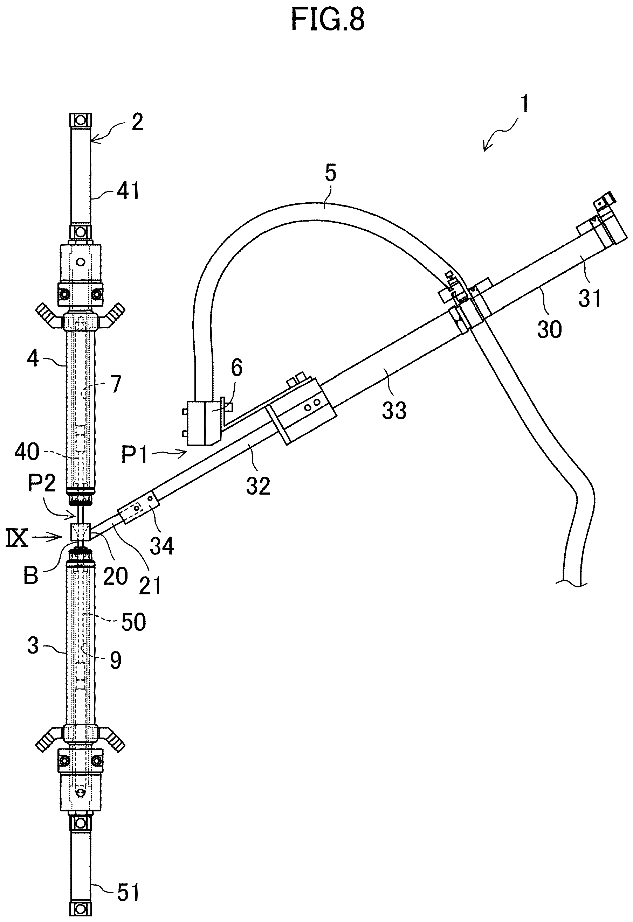

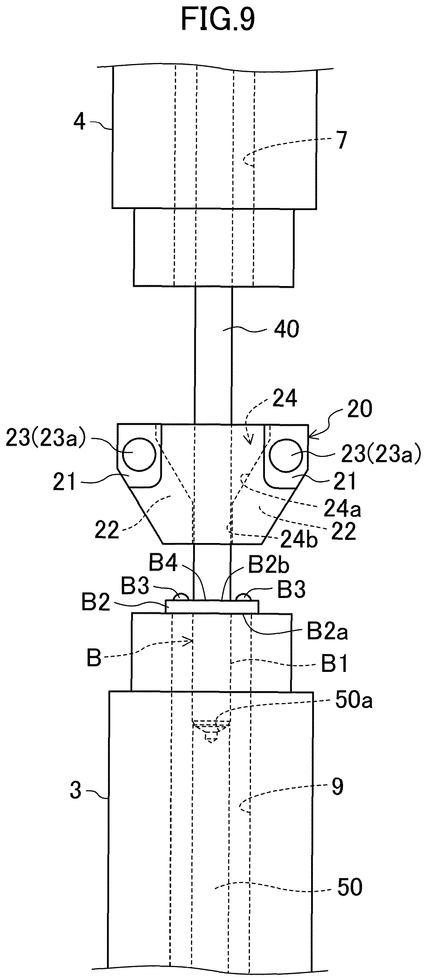

FIGS. 8 and 9 show the head B2 of the bolt B pushed by the pusher member 40. As shown in FIGS. 8 and 9, the pusher member 40 protruding from the tip end of the upper electrode 4 pushes the vicinity (i.e., the non-projecting area) B4 of the center of the top surface B2b of the head B2 of the bolt B. Accordingly, the bolt B moves downward and the shaft B1 of the bolt B is inserted into the insertion hole 9 of the lower electrode 3. The head B2 of the bolt B is mounted on the tip end surface of the lower electrode 3 so that the bottom surface B2a of the head B2 abuts on the tip end surface of the lower electrode 3.

The guide member 50 guides the shaft B1 to the insertion hole 9, while abutting on the tip end of the shaft B1 of the bolt B (specifically, while the holder 50a holds the tip end of the shaft B1). The pressure (i.e., the projection force) of the air cylinder mechanism 41 pushing down the pusher member 40 is set stronger than the pressure (i.e., the projection force) of the air cylinder mechanism 51 pushing up the guide member 50. The guide member 50 is pushed down by the pusher member 40 via the bolt B so as to retract downward from the tip end of the lower electrode 3. After the shaft B1 of the bolt B has been inserted into the insertion hole 9 of the lower electrode 3, the guide member 50 is blocked by the bolt B and does not protrude from the tip end of the lower electrode 3, even if the air cylinder mechanism 51 tries to push up the guide member 50.

The guide member 50 may be retracted downward from the tip end of the lower electrode 3 by the air cylinder mechanism 51 in synchronization with the downward pushing of the head B2 of the bolt B by the pusher member 40.

The head B2 of the bolt B is initially caught by the taper 24a (see FIG. 7). With the head B2 pushed by the pusher member 40, a load is applied to the claws 22 transversely outward (the direction that enables the claws 22 to separate from each other) against the biasing force of the kick spring 23a. Accordingly, the tips of the claws 22 separate from each other, and the head B2 (i.e., the bolt B) held in the bolt holding hole 24 (i.e., the claws 22) is released.

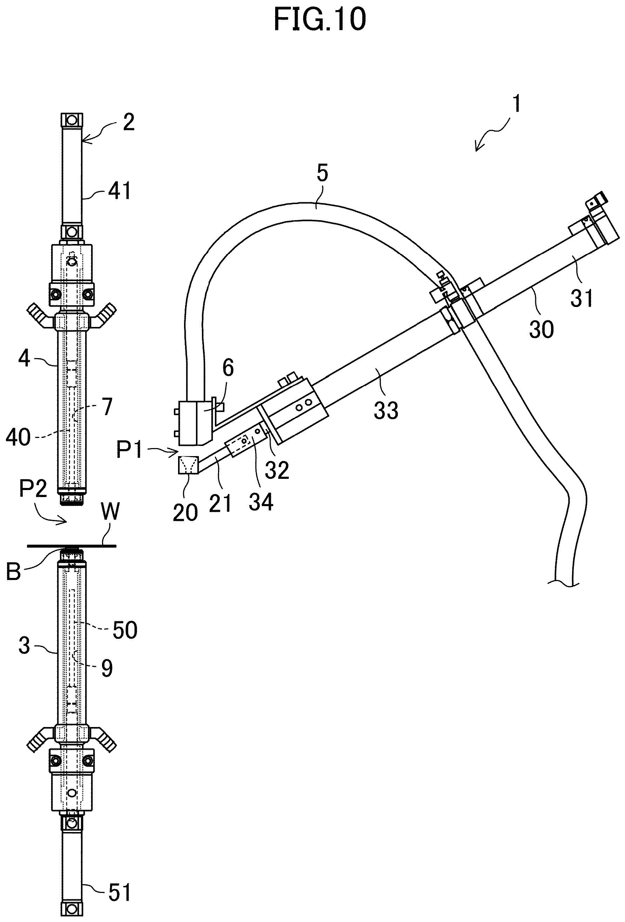

FIG. 10 shows a workpiece W placed on the top of the head B2 of the bolt B. When the shaft B1 of the bolt B is inserted into the insertion hole 9 of the lower electrode 3, as shown in FIG. 10, the air cylinder mechanism 41 first causes the pusher member 40 to retract upward from the tip end of the upper electrode 4. Next, the air cylinder mechanism 30 moves the bolt holder 20 from the welding position P2 to the bolt receiving position P1. At the bolt receiving position P1, the bolt holder 20 receives the next bolt B fed by the bolt chute 5.

At the welding position P2, the workpiece W is placed, specifically mounted on the top of the head B2 of the bolt B. Accordingly, the lower surface W1 of the workpiece W abuts on the projections B3 on the top surface B2b of the head B2 of the bolt B (see FIG. 12).

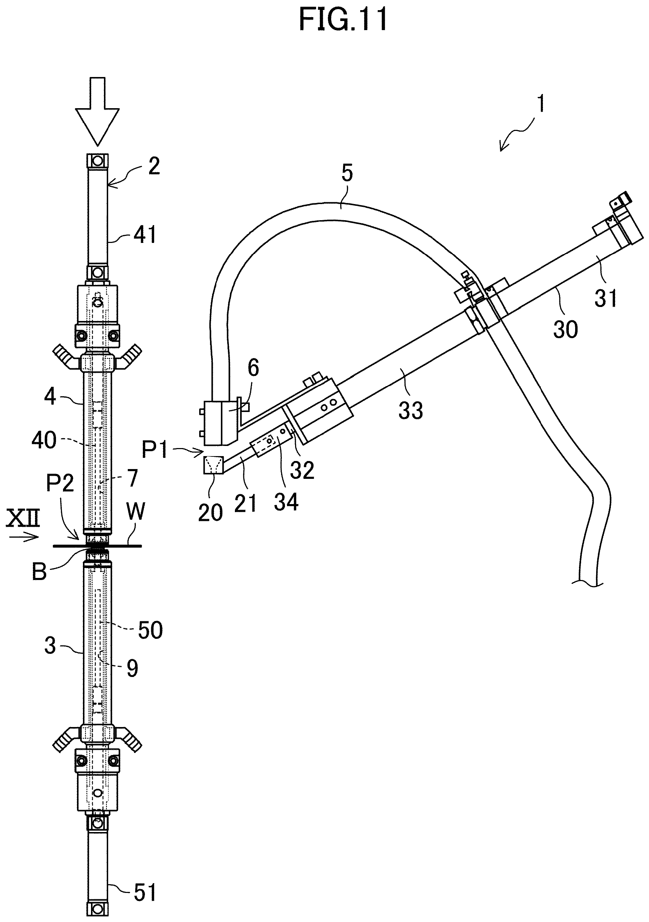

FIGS. 11 and 12 show resistance-welding of the lower surface W1 of the workpiece W and the head B2 of the bolt B. As shown in FIGS. 11 and 12, the upper electrode 4 is moved downward by the air cylinder mechanism (not shown) with the lower surface W1 of the workpiece W and the projections B3 on the top surface B2b of the head B2 of the bolt B abutting on each other. With the workpiece W and the bolt B sandwiched between the lower and upper electrodes 3 and 4, a current is applied between the lower and upper electrodes 3 and 4 to weld the top surface B2b of the head B2 of the bolt B to the lower surface W1 of the workpiece W.

### (Advantages)

According to this embodiment, when the shaft B1 of the bolt B is inserted into the insertion hole 9 of the lower electrode 3, the pusher member 40 protruding from the tip end of the upper electrode 4 pushes the vicinity (i.e., the non-projecting area) B4, where the projections B3 are absent, of the center of the top surface B2b of the head B2 of the bolt B. This can reduce the crush of the projections B3 and can thus reduce improper welding due to the crush of the projections B3.

As described above, the top surface B2b of the head B2 of the bolt B can be welded to the lower surface W1 of the workpiece W, with less crush of the projections B3.

While abutting on the shaft B1 of the bolt B, the guide member 50 guides the shaft B1 of the bolt B to the insertion hole 9 of the lower electrode 3, which allows for more reliable insertion of the shaft B1 of the bolt B into the insertion hole 9 of the lower electrode 3.

In particular, in this embodiment, the tip end of the shaft B1 of the bolt B is held in the cone-shaped holder 50a on the end surface of the guide member 50, which is advantageous in keeping the guide member 50 abutting on the shaft B1 of the bolt B.

Since the pusher member 40 is accommodated in the accommodation hole 7 of the upper electrode 4, the bolt feeder 1 can be miniaturized as compared to the case with the pusher member 40 provided outside the upper electrode 4.

### (Other Embodiments)

Although the present disclosure has been described above with reference to the preferred embodiment, the descriptions thereof are not limitations. Needless to say, various modifications can be made.

The cone-shaped holder may be located not on an end surface of the guide member 50 but on an end surface of the shaft B1 of the bolt B.

The guide member 50 may be absent.

The head B2 of the bolt B is not necessarily in the disk shape, but may be in a polygonal shape, for example.

The area (i.e., the non-projecting area) B4, where the projections B3 are absent, of the top surface B2b of the head B2 of the bolt B may include not only the vicinity of the center of the top surface B2b but also areas between the adjacent projections B3 on the outer circumference of the top surface B2b.

The air cylinder mechanisms 30, 41, and 51 may be each replaced with, for example, a hydraulic cylinder mechanism, an electric cylinder mechanism, a linear motor, or the like.

The number of the projections B3 is not necessarily plural and may be singular.

### INDUSTRIAL APPLICABILITY

The present disclosure is applicable to a bolt feeder and is thus significantly useful and highly industrially applicable.

### DESCRIPTION OF REFERENCE CHARACTERS

- W: Workpiece
- W1: Lower Surface
- B: Bolt
- B1: Shaft
- B2: Head
- B2a: Bottom Surface
- B2b: Top Surface
- B3: Projection
- B4: Non-Projecting Area (Vicinity of Center, Area)
- P1: Bolt Receiving Position
- P2: Welding Position
- 1: Bolt Feeder
- 2: Resistance Welding Machine
- 3: Lower Electrode
- 4: Upper Electrode
- 5: Bolt Chute (Bolt Feeding Unit)
- 7: Accommodation Hole
- 9: Insertion Hole
- 20: Bolt Holder (Holding Unit)
- 30: Air Cylinder Mechanism (Moving Unit)
- 40: Pusher Member
- 50: Guide Member

## Claims

1. A resistance welding system including a resistance welding machine (2) and a bolt feeder (1) for supplying a bolt (B) to the resistance welding machine (2), the resistance welding machine (2) comprising a lower electrode (3) that is stationary and an upper electrode (4) that moves up and down, the lower and upper electrodes (3, 4) being adapted to perform resistance-welding of a workpiece (W) and a bolt (B) supplied by the bolt feeder (1), the bolt (B) including a head (B2), a shaft (B1) extending from a bottom surface (B2a) of the head (B2), and a plurality of projections
(B3) provided on a surface (B2b) of the head (B2),
the projections (B3) being provided on a top surface (B2b) of the head (B2) which is opposite to a surface (B2a) provided with the shaft (B1),
¹¹ wherein the lower electrode (3) includes an insertion hole (9) which faces the upper electrode (4), the insertion hole (9) being adapted to receive the shaft (B1) of the bolt (B), and
wherein the bolt feeder (1) comprises:
a holding unit (20) configured to receive the bolt (B) fed by a bolt feeding unit (5) at a bolt receiving position (P1) with the bolt (B) being oriented such that the head (B2) is located above the shaft (B 1); and
a moving unit (30) configured to move the holding unit (20) holding the bolt (B) from the bolt receiving position (P1) to a welding position (P2) between the lower electrode (3) and the upper electrode (4);
**characterized in that** the bolt feeder (1) further comprises a pusher member (40) having a smaller diameter than the upper electrode (4) and being configured to protrude from and retract into a tip end of the upper electrode (4),and
**in that** the pusher member (40) protruding from the tip end of the upper electrode (4) is configured to push an area (B4) of the top surface (B2b) of the bolt (B) where the projection (B3) is absent in the welding position (P2) of the holding unit (20) so as to insert the shaft (B1) of the bolt (B) into the insertion hole (9) of the lower electrode (3).

2. The resistance welding system of claim 1, further comprising:
a guide member (50) accommodated in the insertion hole (9) of the lower electrode (3) and configured to protrude from and retract into a tip end of the lower electrode (3), wherein
the guide member (50) being configured to guide the shaft (B1) to the insertion hole (9) while abutting on the shaft (B1).

## Patentansprüche

1. Widerstandsschweißsystem, das eine Widerstandsschweißmaschine (2) und einen Bolzenzuführer (1) zum Zuliefern einer Schraube (B) zur Widerstandsschweißmaschine (2) umfasst, wobei die Widerstandsschweißmaschine (2) eine untere Elektrode (3), die stationär ist, und eine obere Elektrode (4) umfasst, die sich nach oben und unten bewegt, wobei die untere und die obere Elektrode (3, 4) ausgelegt sind, um ein Widerstandsschweißen eines Werkstücks (W) und einer Schraube (B), die vom Bolzenzuführer (1) geliefert wird, durchzuführen, wobei die Schraube (B) einen Kopf (B2), eine Welle (B1), die sich von einer Bodenfläche (B2a) des Kopfes (B2) erstreckt, und eine Vielzahl von Vorsprüngen (B3) enthält, die auf einer Oberfläche (B2b) des Kopfes (B2) vorgesehen sind, wobei die Vorsprünge (B3) auf einer oberen Oberfläche (B2b) des Kopfes (B2) vorgesehen sind, die einer mit dem Schaft (B1) versehenen Oberfläche (B2a) gegenüberliegt,
wobei die untere Elektrode (3) ein Einführloch (9) enthält, das der oberen Elektrode (4) zugewandt ist, wobei das Einführloch (9) ausgelegt ist, um den Schaft (B1) der Schraube (B) aufzunehmen, und
wobei der Bolzenzuführer (1) umfasst:
eine Halteeinheit (20), die so eingerichtet ist, dass sie den von einer Bolzenzuführeinheit (5) zugeführten Bolzen (B) an einer Bolzenaufnahmeposition (P1) aufnimmt, wobei der Bolzen (B) so ausgerichtet ist, dass sich der Kopf (B2) über der Welle (B1) befindet; und
eine bewegliche Einheit (30), die so eingerichtet ist, dass sie die Halteeinheit (20), die den Bolzen (B) hält, von der Bolzenaufnahmeposition (P1) zu einer Schweißposition (P2) zwischen der unteren Elektrode (3) und der oberen Elektrode (4) bewegt;
**dadurch gekennzeichnet, dass** der Bolzenzuführer (1) ferner ein Schieberelement (40) umfasst, das einen kleineren Durchmesser als die obere Elektrode (4) aufweist und so eingerichtet ist, dass es aus einem Spitzenende der oberen Elektrode (4) herausragt und sich in dieses zurückzieht, und
dass das aus dem Spitzenende der oberen Elektrode (4) herausragende Schieberelement (40) so eingerichtet ist, dass es einen Bereich (B4) der oberen Oberfläche (B2b) des Bolzens (B) schiebt, in dem der Vorsprung (B3) in der Schweißposition (P2) der Halteeinheit (20) fehlt, um den Schaft (B1) des Bolzens (B) in das Einführloch (9) der unteren Elektrode (3) einzusetzen.

2. Widerstandsschweißsystem nach Anspruch 1, ferner umfassend:
ein Führungselement (50), das in dem Einführloch (9) der unteren Elektrode (3) untergebracht und so eingerichtet ist, dass es aus einem Spitzenende der unteren Elektrode (3) herausragt und sich in dieses zurückzieht, wobei
das Führungselement (50) so eingerichtet ist, dass es die Welle (B1) zum Einführloch (9) führt, während es auf der Welle (B1) aufliegt.

## Revendications

1. Système de soudage par résistance comprenant une machine de soudage par résistance (2) et un distributeur de boulons (1) pour fournir un boulon (B) à la machine de soudage par résistance (2), la machine de soudage par résistance (2) comprenant une électrode inférieure (3) qui est fixe et une électrode supérieure (4) qui se déplace de haut en bas, les électrodes inférieure et supérieure (3, 4) étant adaptées pour réaliser le soudage par résistance d'une pièce de travail (W) et d'un boulon (B) fourni par le distributeur de boulons (1), le boulon (B) comprenant une tête (B2), une tige (B1) s'étendant depuis une surface inférieure (B2a) de la tête (B2), et une pluralité de saillies (B3) prévues sur une surface (B2b) de la tête (B2),
les saillies (B3) étant prévues sur une surface supérieure (B2b) de la tête (B2) qui est opposée à une surface (B2a) munie de la tige (B1),
dans lequel l'électrode inférieure (3) comprend un trou d'insertion (9) qui fait face à l'électrode supérieure (4), le trou d'insertion (9) étant adapté pour recevoir la tige (B1) du boulon (B), et
dans lequel le distributeur de boulons (1) comprend :
une unité de maintien (20) configurée pour recevoir le boulon (B) acheminé par une unité d'acheminement de boulons (5) à une position de réception de boulon (P1), le boulon (B) étant orienté de sorte que la tête (B2) soit située au-dessus de la tige (B1) ; et
une unité de déplacement (30) configurée pour déplacer l'unité de maintien (20) maintenant le boulon (B) de la position de réception de boulon (P1) à une position de soudage (P2) entre l'électrode inférieure (3) et l'électrode supérieure (4) ;
**caractérisé en ce que** le distributeur de boulons (1) comprend en outre un élément poussoir (40) ayant un diamètre inférieur à celui de l'électrode supérieure (4) et étant configuré pour faire saillie depuis une extrémité de pointe de l'électrode supérieure (4) et se rétracter dans celle-ci, et
**en ce que** l'élément poussoir (40) faisant saillie depuis l'extrémité de pointe de l'électrode supérieure (4) est configuré pour pousser une zone (B4) de la surface supérieure (B2b) du boulon (B) où la saillie (B3) est absente dans la position de soudage (P2) de l'unité de maintien (20) de manière à insérer la tige (B1) du boulon (B) dans le trou d'insertion (9) de l'électrode inférieure (3).

2. Système de soudage par résistance selon la revendication 1, comprenant en outre :
un élément de guidage (50) reçu dans le trou d'insertion (9) de l'électrode inférieure (3) et configuré pour faire saillie depuis une extrémité de pointe de l'électrode inférieure (3) et se rétracter dans celle-ci, dans lequel
l'élément de guidage (50) étant configuré pour guider la tige (B1) vers le trou d'insertion (9) tout en venant en butée contre la tige (B1).
